Europäisches Patentamt

European Patent Office

Office européen des brevets

(11) Veröffentlichungsnummer: **0 183 089**

**A1**

(12) **EUROPÄISCHE PATENTANMELDUNG**

(21) Anmeldenummer: 85113985.7

(22) Anmeldetag: 04.11.85

(51) Int. Cl.⁴: **B 60 T 15/38**
B 60 T 13/14, B 60 T 13/68

(30) Priorität: 29.11.84 DE 3443638

(43) Veröffentlichungstag der Anmeldung:
04.06.86 Patentblatt 86/23

(84) Benannte Vertragsstaaten:
CH DE FR GB LI SE

(71) Anmelder: KNORR-BREMSE AG
Moosacher Strasse 80 Postfach 401060
D-8000 München 40(DE)

(72) Erfinder: Hommen, Winfried
Franziskanerstrasse 28
D-8000 München 80(DE)

(72) Erfinder: Stäuble, Georg
Zittauer Strasse 20
D-8000 München 50(DE)

(72) Erfinder: Wieser, Tiberius
Riesstrasse 82
D-8000 München 50(DE)

(54) Hydraulikbremse für Fahrzeuge, insbesondere Schienenfahrzeuge.

㉗ Die Hydraulikbremse für Fahrzeuge, insbesondere Schienenfahrzeuge, weist nahe des Bremszylinders bzw. Federspeicherbremszylinders 1 eine Schnellanlegeeinrichtung auf, welche zu Bremsbeginn die lange, zur räumlich entfernten Bremssteuereinheit führende Bremsleitung 7 vom Durchsatz großer Hydraulikmedienmengen entlastet und somit ein beschleunigtes Anlegen der Fahrzeugbremse bewirkt. Die Schnellanlegeeinrichtung umfaßt ein Schnellanlegeventil 10' und einen Hydraulikspeicher 11. Während gelöster Bremse wird der Hydraulikspeicher 11 auf einen Bremsdruck aufgeladen gehalten. Zu Bremsbeginn wird der Hydraulikspeicher 11 mit dem Bremszylinder bzw. Federspeicherbremszylinder 1 verbunden, wodurch zwischen beiden ein rascher Druckausgleich eintritt, welcher zum Anlegen der Fahrzeugbremse ausreicht. Die weitere Bremsung erfolgt in üblicher Weise durch entsprechende Druckeinsteuerung in die Bremsleitung 7 vermittels der Bremssteuereinheit 8.

FIG. 2

EP 0 183 089 A1

Knorr-Bremse GmbH AG
Moosacher Straße 80
8000 München 40

München, den 7.11.1984
TP-ku
unser Zeichen: 1819
Text.Nr.: 0054P

Hydraulikbremse für Fahrzeuge, insbesondere Schienenfahrzeuge

Die Erfindung betrifft eine Hydraulikbremse für Fahrzeuge, insbesondere Schienenfahrzeuge, mit einer Bremssteuereinheit zum Erstellen eines wenigstens einem räumlich von der Bremssteuereinheit entfernt angeordneten Bremszylinders durch eine Bremsleitung zuzuführenden Bremszylinderdruckes durch Verbindung der Bremsleitung mit einem hydraulischen Druckspeicher oder mit einem drucklosen Vorratsbehälter oder Absperren der Bremsleitung.

Bei derartigen Hydraulikbremsen, bei welchen es bekannt ist, den Vorratsbehälter, den Druckspeicher, eine den Druckspeicher aus dem Vorratsberhälter aufladende Fördereinrichtung sowie den Druck im Druckspeicher überwachende Druckregel- und Sicherheitseinrichtungen in die Bremssteuereinheit zu integrieren, und bei welcher es weiterhin bekannt ist, der Bremssteuereinheit zur Steuerung des Bremszylinderdruckes Signale von einer Steuerelektronik zuzuführen, besteht die Schwierigkeit, zu Bremsbeginn bis zum Ansprechen des Bremszylinders und Anlegen der Bremsen große Hydraulikmengen durch die Bremsleitung zu fördern. Insbesondere bei niedrigen Temperaturen des mit Temperaturabfall zähflüssiger werdenden Hydraulikmediums wirkt sich der Strömungswiderstand in der Bremsleitung besonders stark aus, so daß das Fördern der erwähnten, großen Mengen Hydraulikflüssigkeit beachtliche Zeit erfordert und das Ansprechen des Bremszylinders bzw. Anlegen der Bremse nur zeitlich verzögert erfolgen kann. Hierdurch wird das Einsetzen der Bremswirkung für das Fahrzeug zu Bremsbeginn in unerwünschter Weise verzögert. Dies gilt sowohl für Hydraulikbremsen mit bei Druckbeaufschlagung eine Bremsung bewirkenden Bremszylindern, bei welchen zu Bremsbeginn eine große Hydraulikmenge zum Bremszylinder gefördert werden muß, wie auch bei Hydraulikbremsen mit Federspeicherbremszylindern, bei welchen zu Bremsbeginn große Hydraulikmengen vom Bremszylinder wegtransportiert werden müssen.

Es ist Aufgabe der Erfindung, eine Hydraulikbremse der eingangs genannten Art derart auszugestalten, daß die Mängel der bekannten Hydraulikbremsen vermieden werden, insbesondere daß zu Bremsbeginn ein rasches Ansprechen des Bremszylinders bzw. Anlegen der Bremse erfolgt, die Bremswirkung also sehr rasch einsetzt.

Diese Aufgabe wird nach der Erfindung dadurch gelöst, daß räumlich nahe des Bremszylinders eine mit dessen Beaufschlagungsraum in Verbindung stehende Schnellanlegeeinrichtung angeordnet ist, welche zu Bremsbeginn einen zu diesem Zeitpunkt einen eine Bremsung bewirkenden Bremsdruck führenden Hydraulikspeicher mit dem Beaufschlagungsraum des Bremszylinders verbindet und spätestens beim nachfolgenden Bremsenlösen die Verbindung wieder unterbricht und den Hydraulikspeicher erneut mit dem Bremsdruck beaufschlagt. Durch den Hydraulikspeicher wird hierbei die Bremsleitung zu Beginn von der Förderung großer Hydraulikmengen entlastet, diese Hydraulikmengen müssen vielmehr nur durch die kurze Verbindung vom Hydraulikspeicher zum Bremszylinder strömen, was sehr rasch erfolgen kann und wodurch somit ein rasches Ansprechen des Bremszylinders bzw. Anlegen der Bremse möglich ist.

Den Unteransprüchen sind nach der weiteren Erfindung vorteilhafte und zweckmäßige Ausgestaltungsmöglichkeiten für eine nach den Merkmalen des Patentanspruches 1 ausgebildete Hydraulikbremse entnehmbar.

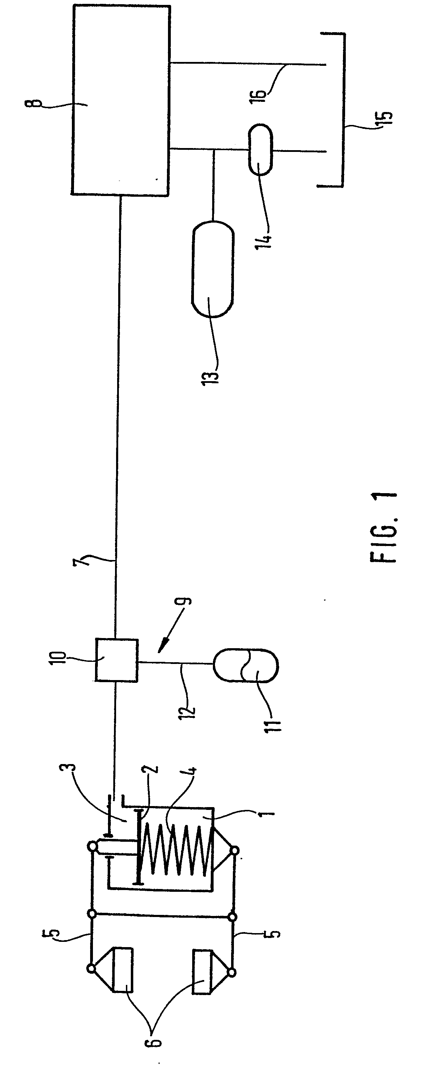

In den Zeichnungen Fig.1 bis Fig.4 sind unterschiedliche Ausführungsbeispiele für nach der Erfindung ausgebildete Hydraulikbremsen dargestellt, wobei sich jeweils gleiche Bezugszahlen auf einander entsprechende Teile in den unterschiedlichen Ausführungsbeispielen beziehen.

In Fig.1 ist ein Federspeicherbremszylinder dargestellt, dessen Kolben 2 einerseits einen Beaufschlagungsraum 3 begrenzt und andererseits von einer Speicherfeder 4 belastet ist. Der Federspeicherbremszylinder 1 ist zwischen den Enden der Bremshebel 5 einer üblichen Bremsstange eingeordnet, die Bremshebel 5 tragen andererseits Bremsbacken 6, welche an eine nicht dargestellt Bremsscheibe anpreßbar sind. In den Beaufschlagungsraum 3 mündet eine Bremsleitung 7 ein, welche zu einer vom Federspeicherbremszylinder 1 räumlich entfernt angeordneten Bremssteuereinheit 8 führt. Räumlich nahe des Federspeicherbremszylinders 1 befindet sich eine Schnellanlegeeinrichtung 9, welche ein Schnellanlegeventil 10 und einen Hydraulikspeicher 11 umfaßt. Das Schnellanlegeventil 10 ist nahe des Federspeicherbremszylinders 1 in die Bremsleitung 7 eingeordnet und steht über eine kurze Rohrleitung 12 mit dem Hydraulikspeicher 11 in Verbindung. Das in Fig.1 in seinem inneren Aufbau nicht dargestellte Schnellanlegeventil 10 kann ein einfaches Absperrventil enthalten, welches eine Verbindung zwischen der Bremsleitung 7 und der Vorleitung 12 überwacht. Der Bremssteuereinheit 8 ist zur hydraulischen Druckversorgung ein hydraulischer Druckspeicher 13 zugeordnet, der mittels einer Hydraulikpumpe 14 aus einem drucklosen Vorratsbehälter 15 für das Hydraulikmedium aufladbar ist; eine Rückleitung 16 führt von der Bremssteuereinheit 8 zum Vorratsbehälter 15. In der Bremssteuereinheit 8 sind nicht dargestellte Druckregel- Sicherheitseinrichtungen üblicher Art vorgesehen, welche den Druck im hydraulischen Druckspeicher überwachen. Die mit den Bezugszahlen 13 bis 16 versehenen Teile können abweichend zum dargestellten Ausführungsbeispiel auch in die Bremssteuereinheit 8 integriert angeordnet sein. Die Bremssteuereinheit 8 kann in beliebiger, bekannter Weise, beispielsweise mittels einer in Fig.1 dargestellten Steuerelektronik, angesteuert sein.

Bei gelösten Bremsen speist die Bremssteuereinheit 8 in die Bremsleitung 7 und damit den Beaufschlagungsraum 3 des Federspeicherbremszylinders 1 einen Druck ein, welcher ausreicht, den Kolben 2 entgegen der Kraft der Speicherfeder 4 derart zu verschieben und zu halten, daß die Bremsbacken 6 um ein bestimmtes Lösespiel von der nicht dargestellten Bremsscheibe abgehoben sind.

Die Druckversorgung der Bremssteuereinheit erfolgt hierbei aus dem hydraulischen Druckspeicher 13. Das Schnellanlegeventil 10 sperrt in diesem Lösezustand die Rohrleitung 12 von der Bremsleitung 7 ab, der Hydraulikspeicher 11 ist drucklos.

Zu Bremsbeginn steuert die Bremssteuereinheit 8 um und beginnt die Bremsleitung 7 durch die Rückleitung 16 in den Vorratsbehälter 15 zu entleeren. Gleichzeitig hierzu wird mittels einer nicht dargestellten Steuereinrichtung, beispielsweise der bereits erwähnten Steuerelektronik, das Schnellanlegeventil 10 derart angesteuert, daß es öffnet und die Rohrleitung 12 und damit den Hydraulikspeicher 11 mit der Bremsleitung 7 verbindet. Aus dem Beaufschlagungsraum 3 des Federspeicherbremszylinders 1 strömt infolgedessen rasch Hydraulikmedium in den bisher drucklosen bzw. leeren Hydraulikspeicher 11 ein, bis ein Druckausgleich zwischen den Drücken im Hydraulikspeicher 11, dem Beaufschlagungsraum 3 bzw. der Bremsleitung 7 im dem Bremszylinder 1 nahen Abschnitt erreicht ist. Dies bewirkt eine rasche Minderung der Menge des im Beaufschlagungsraum 3 vorhandenen Hydraulikmediums, so daß der dort herrschende Druck rasch um einen bestimmten, vom Aufnahmevermögen des Hydraulikspeichers 11 abhängigen Wert vermindert wird, der Federspeicherbremszylinder 1 infolgedessen anspricht, wobei die Speicherfeder 4 den Kolben 2 in Richtung zum Beaufschlagungsraum 3 derart verschiebt, daß die Bremsbacken 6 an die nicht dargestellte Bremsscheibe angelegt werden, also ein Anlegezustand der Bremse erreicht wird. Im weiteren Verlauf des Bremsvorganges strömt weiteres Hydraulikmedium aus dem Beaufschlagungsraum 3 und aus dem Hydraulikspeicher 11 durch die Bremsleitung 7, die Bremssteuereinheit 8 und die Rückleitung 16 zum Vorratsbehälter 15 ab, wobei der Hydraulikdruck im Beaufschlagungsraum 3 entsprechend weiter gemindert und die Bremse damit entsprechend zugespannt wird. Bei Erreichen der maximalen Bremsstärke sind der Beaufschlagungsraum 3 und der Hydraulikspeicher 11 drucklos bzw. entleert. Anschließend schließt durch entsprechende Ansteuerung das Schnellanlegeventil 10 wieder.

Wird beim nachfolgenden Wiederlösen der Bremse durch die Bremssteuereinheit

8 aus dem hydraulischen Druckspeicher 13 Hydraulikmedium durch die Bremsleitung 7 in den Beaufschlagungsraum 3 eingespeist, wobei sich im letzteren ein Druckanstieg ergibt, so verbleibt der Hydraulikspeicher 11 durch das geschlossene Schnellanlegeventil 10 drucklos und entleert. Sobald im Beaufschlagungsraum 3 der Ausgangs- bzw. Lösedruck wieder erreicht wird, wird der Kolben 2 in seiner Ausgangsstellung bei gelösten Bremsen zurückgedrückt, wobei die Bremsbacken 6 sich von der Bremsscheibe abheben. Damit ist der Ausgangszustand wieder erreicht.

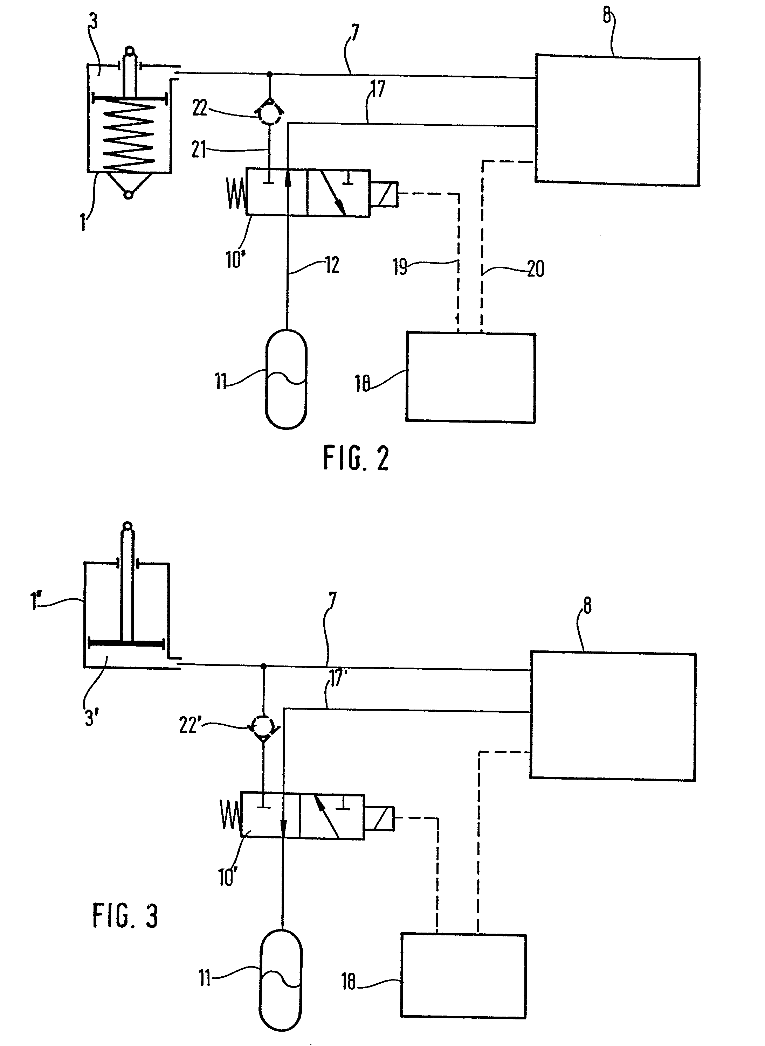

In Fig.2 ist eine Hydraulikbremse dargestellt, welche im wesentlichen derjenigen nach Fig.1 entspricht; lediglich das Schnellanlegeventil 10' ist als 3/2-Wegemagnetventil ausgebildet und vom Schnellanlegeventil 10' erstreckt sich eine Tankleitung 17 zur Bremssteuereinheit 8. In Fig.2 ist weiterhin die Steuerelektronik 18 gezeigt, welche über Steuerkabel 19 bzw. 20 das Schnellanlegeventil 10' bzw. die Bremssteuereinheit 8 steuert. Die Bremshebel mit den Bremsbacken und die hydraulische Druckversorgung für die Bremssteuereinheit 8 sind in Fig.2 weggelassen.

Bei gelösten Bremsen steuert die Bremssteuereinheit 8 in die Bremsleitung 7, wie zu Fig.1 beschrieben, einen Lösedruck ein, welcher den Federspeicherbremszylinder 1 in der gelösten Bremsen entsprechenden Stellung hält. Gleichzeitig hält die Bremssteuereinheit 8 die Tankleitung 17 drucklos. Das Schnellanlegeventil 10' sperrt eine zur Bremsleitung 7 führende Rohrleitung 21 ab und verbindet die Tankleitung 17 mit der Rohrleitung 12 und dem Hydraulikspeicher 11.

Zu Bremsbeginn steuert die Steuerelektronik 18 vermittels der Steuerkabel 19 und 20 das Schnellanlegeventil 10' und die Bremssteuereinheit 8 derart an, daß das Schnellanlegeventil 10' umschaltet und unter nunmehriger Absperrung der Tankleitung 17 die Rohrleitungen 21 und 12 miteinander verbindet, während die Bremssteuereinheit 8 eine Druckabsenkung in Bremsleitung 7 einsteuert. Aus dem Beaufschlagungsraum 3 des Federspeicherbremszylinders 1 strömt Hydraulikmedium rasch durch einen kurzen Abschnitt der Bremsleitung 7, die Rohrleitung 21, das Schnellanlegeventil 10 und die Rohrleitung 12 zum Hydraulikspeicher 11 ab, bis dieser bis zum Druckausgleich mit dem Beaufschlagungsraum 3 gefüllt ist. Es tritt somit eine rasche Druckabsenkung im Beaufschlagungsraum 3 um einen Wert ein, welcher ein schnelles Ansprechen des Federspeicherbremszylinders 1 und damit Anlegen der Fahrzeugbremse bewirkt. Nachfolgend werden durch die Bremssteuereinheit 8 die Bremsleitung 7, der Beaufschlagungsraum 3 und durch das Schnellanlegeventil 10' der Hydraulikspeicher 11 entsprechend der gewünschten Bremsstärke entleert und in ihrem Druck abgebaut. Bei Erreichen der gewünschten Bremsstärke sperrt die Bremssteuereinheit 8 durch entsprechende Ansteuerung aus der Steuerelektronik 18 die Bremsleitung 7 ab und hält die in dieser augenblicklich herrschende Druckhöhe konstant aufrecht.

Beim nachfolgenden Bremsenlösen wird durch entsprechende Ansteuerung aus der Steuerelektronik 18 die Bremssteuereinheit 8 veranlaßt, in die Bremsleitung 7 wieder Hydraulikmedium einzuspeisen. Gleichzeitig veranlaßt die Steuerelektronik 18 das Schnellanlegeventil 10' in seinen Ausgangszustand zurückzuschalten, in welchem die Rohrleitungen 21 und 12 voneinander abgetrennt und die Rohrleitung 12 mit der nach wie vor drucklosen Tankleitung 17 verbunden sind. Während also im Beaufschlagungsraum 3 ein ein Bremsenlösen bewirkender Druckaufbau erfolgt, entleert sich der Hydraulikspeicher 11 durch die Tankleitung 17 und gelangt hierdurch wieder in seinen drucklosen, leeren Ausgangszustand zurück. Im übrigen verlaufen die Brems- und Lösevorgänge der Hydraulikbremse nach Fig.2 wie zu Fig.1 beschrieben.

Es ist zweckmäßig, die Tankleitung 17 durch die Bremssteuereinheit 8 ständig mit dem gegebenenfalls in diese integrierten Vorratsbehälter 15 gemäß Fig.1 zu verbinden und hierdurch drucklos zu halten. Weiterhin ist es möglich, in die Rohrleitung 21, welche einen von der Bremsleitung 7 zum Schnellanlegeventil 10' abzweigenden Rohrleitungsast darstellt, ein in Strömungsrichtung zum Schnellanlegeventil 10' öffnendes Rückschlagventil 22 einzuordnen, wie es in Fig.2 gestrichelt angedeutet ist. Dieses Rückschlagventil 22 behindert nicht die rasche Druckabsenkung im Beaufschlagungsraum 3 zu Bremsbeginn, schließt jedoch während des nachfolgenden Bremsvorganges ein Rückfließen des in den Hydraulikspeicher 11 eingeflossenen Hydraulikmediums durch die Bremsleitung 7 zur Bremssteuereinheit 8 aus, wodurch auch der weitere Bremsvorgang rasch und durch unnötige Hydraulikmedium-Fließvorgänge in der Bremsleitung 7 unbehindert ablaufen kann. Unabhängig davon, ob nur eine Teilbremsung mit nur teilweisem Druckabbau in der Bremsleitung 7 oder eine Vollbremsung mit vollständigem Druckabbau in der Bremsleitung 7 erfolgt, bleibt infolge der Wirkung des Rückschlagventils 22 der anfänglich in den Hydraulikspeicher 11 eingesteuerte Hydraulikdruck erhalten, bis während des Lösevorganges das Schnellanlegeventil 10' in der vorbeschriebenen Weise zurücksteuert und die Rohrleitung 12 mit der Tankleitung 17 verbindet.

Ähnliche Wirkungen können durch geänderte Ansteuerungen des Schnellanlegeventils 10' erreicht werden: beispielsweise ist es möglich, das Schnellanlegeventil 10' zu Bremsbeginn nur für eine kurze Zeitspanne in seine die Rohrleitungen 21 und 12 miteinander verbindende Schaltstellung umzusteuern, wobei die Zeitspanne gerade zum Erreichen eines Druckausgleiches zwischen dem Beaufschlagungsraum 3 und dem Hydraulikspeicher 11 ausreichen muß. Während des weiteren Bremsvorganges befindet sich dann das Schnellanlegeventil 10' bereits wieder in seiner in Fig.2 dargestellten Stellung, in welcher die Rohrleitung 21 abgesperrt und der Hydraulikspeicher 11 zu seiner Entleerung mit der Tankleitung 17 verbunden ist. Auch hierdurch wird eine Entlastung der Bremsleitung 7 während der weiteren Bremsvorgänge von Hydraulikmedium-Rückströmungen vom Hydraulikspeicher 11 zur Bremssteuereinheit 8 entlastet; zusätzlich ergibt sich der Vorteil, daß sofort nach dem Bremsenlösen der bereits während des Bremsvorganges entleerte Hydraulikspeicher 11 wieder betriebsbereit ist und somit ein sofortiges, erneutes Einbremsen mit raschem Bremsenanlegen erfolgen kann. Zum Erreichen des letzterwähnten Vorteils ist es auch möglich, das Schnellanlegeventil 10' nicht, wie zu Fig.2

0183089

anfänglich beschrieben erst beim Bremsenlösen, sondern bereits bei Beendigen des Bremssteuervorganges bzw. zu Beginn des Bremsenlösens rückzuschalten.

Ebenso wie bei der Ausführung nach Fig.1 kann es bei der Hydraulikbremse nach Fig.2 zweckmäßig sein, das Volumen des Hydraulikspeichers 11 einstellbar zu gestalten, derart, daß beim Erreichen des Druckausgleichs zwischen dem Beaufschlagungsraum 3 und dem Hydraulikspeicher 11 zu Bremsbeginn gerade ein Anlegen der Bremsen mit einer genau vorwählbaren Kraft erfolgt.

Bei dem Ausführungsbeispiel nach Fig.1 und Fig.2 weist die Hydraulikbremse einen Federspeicherbremszylinder 1 zum Zuspannen der Fahrzeugbremse auf. Die Schnellanlegeeinrichtung ist abweichend hierzu jedoch auch für Hydraulikbremsen geeignet, welche einen bei Hydraulikdruckbeaufschlagung ein Bremsenzuspannen bewirkenden Bremszylinder aufweisen. Die Hydraulikbremse nach Fig.1 ist dabei derart abzuwandeln, daß die Bremssteuereinheit 8 bei gelösten Bremsen die Bremsleitung 7 entleert hält, der von der Bremsleitung 7 hierbei abgesperrte Hydraulikspeicher 11 ist dagegen mit Hydraulikmedium aufgeladen. Zu Bremsbeginn steuert dann die Bremssteuereinheit 8 in die Bremsleitung 7 Hydraulikmedium zum Druckaufbau im Bremszylinder ein, während zugleich das Schnellanlegeventil 10 umsteuert und eine rasche, begrenzte Drucksteigerung im Bremszylinder durch Einspeisen des im Hydraulikspeicher 11 gespeicherten Hydraulikmediums bewirkt. Der so im Bremszylinder bewirkte Druckansprung reicht zum Anlegen der Fahrzeugbremsen aus. Der weitere Bremsvorgang erfolgt in üblicher Weise durch weitere Druckeinspeisung in die Bremsleitung 7 und den Bremszylinder, wobei zugleich auch der Hydraulikspeicher 11 wieder aufgeladen wird. Bei Beendigen der Drucksteigerung bzw. Erreichen des maximalen Bremsdruckes in der Bremsleitung 7 und damit dem Hydraulikspeicher 11 wird das Schnellanlegeventil 10 wieder rückgeschaltet, wobei es den Hydraulikspeicher 11 von der Bremsleitung 7 und dem Bremszylinder absperrt. Beim nachfolgenden Bremsenlösen entleert die Bremssteuereinheit 8 die Bremsleitung 7 mit dem Bremszylinder, während der Hydraulikdruck im Hydraulikspeicher 11 erhalten bleibt. Bei völligem Druckabbau in der Bremsleitung 7 ist der Lösezustand wieder erreicht.

Entsprechend ist auch die Hydraulikbremse nach Fig.2 zur Verwendung mit einem bei Druckaufbau eine Bremsung bewirkenden Bremszylinder umgestaltbar, wie Fig.3 zeigt. Die Hydraulikbremse nach Fig.3 entspricht mit den Ausnahmen, daß ein einfacher, bei Druckaufbau eine Bremsung bewirkender Bremszylinder 1' Verwendung findet, daß das gegebenenfalls in die Rohrleitung 21 eingeordnete Rückschlagventil 22' bei Hydraulikströmung vom Schnellanlegeventil 10' zur Bremsleitung 7 öffnet, und daß anstelle der Tankleitung 17 eine ständig Hydraulikdruck führende Speicherleitung 17' vorgesehen ist, der Hydraulikbremse nach Fig.2. Es ist zweckmäßig, die Speicherleitung 17' durch die Bremssteuereinheit 8 ständig mit dem hydraulischen Druckspeicher 13 (Fig.1) zu verbinden.

Bei der Hydraulikbremse nach Fig.3 hält im Lösezustand die Bremssteuereinheit 8 die Bremsleitung 7 drucklos, während der Hydraulikspeicher 11 aus der Speicherleitung 17' durch das Schnellanlegeventil 10' mit Hydraulikmedium aufgeladen gehalten wird. Zu Bremsbeginn steuert das Schnellanlegeventil 10', angesteuert von der Steuerelektronik 18, um und aus dem Hydraulikspeicher 11 gelangt Hydraulikmedium in den Beaufschlagungsraum 3' des Bremszylinders 3, wodurch ein rascher,.zum Bremsenanlegen ausreichender Druckaufbau im Beaufschlagungsraum 3' erfolgt. Die Speicherleitung 17' wird beim Umschalten des Schnellanlegeventils 10' abgesperrt. Gleichzeitig beginnt die Bremssteuereinheit 8 in die Bremsleitung 7 eine Drucksteigerung einzuspeisen, welche bis zum Erreichen des gewünschten Bremszustandes anhält. Beim nachfolgenden Bremsenlösen bewirkt die Bremssteuereinheit 8 eine Druckabsenkung in der Bremsleitung 7 und dem Beaufschlagungsraum 3', während zugleich das Schnellanlegeventil 10' zurückschaltet und den von der Bremsleitung 7 abgetrennten Hydraulikspeicher 11 erneut aus der Speicherleitung 17' auflädt. Das Rückschlagventil 22' schließt ein Einströmen von Hydraulikmedium aus der Bremsleitung 7 in den Hydraulikspeicher 11 nach dem Bremsenanlegen während des weiteren Bremsvorganges aus. Die Ansteuerung des Schnellanlegeventils 10' kann in den verschiedenen, zu Fig.2 beschriebenen Weisen erfolgen.

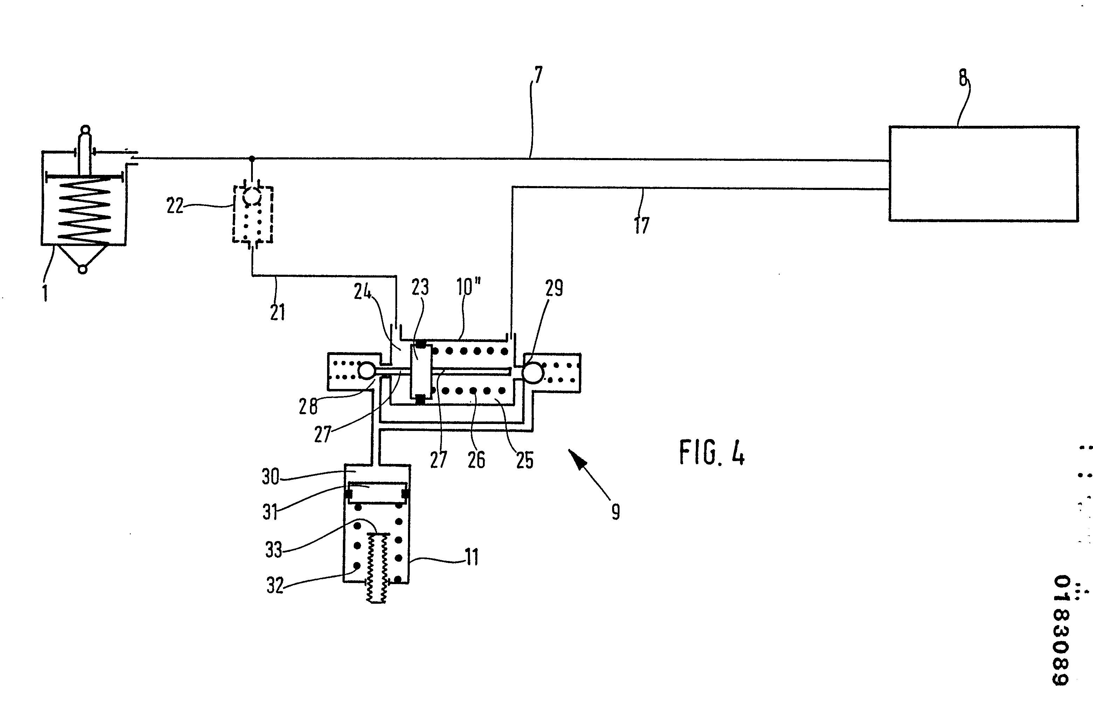

Die Hydraulikbremse nach Fig.4 entspricht im wesentlichen der Hydraulikbremse nach Fig.2 mit einem Federspeicherbremszylinder 1, wobei jedoch die Schnellanlegeeinrichtung 9 mit dem Schnellanlegeventil 10'' und dem Hydraulikspeicher 11 rein hydraulisch wirkend und ansteuerbar ausgebildet sind. Das Schnellanlegeventil 10'' weist einen Schaltkolben 23 auf, der einerseits vom Druck in einem über die Rohrleitung 21 mit der Bremsleitung 7 verbundenen Beaufschlagungsraum 24 und andererseits von der Kraft einer in einem Raum 25 angeordneten Feder 26 belastet ist. Der Raum 25 ist an die Tankleitung 7 angeschlossen. Der Schaltkolben 23 trägt beiderseits Ventilstößel 27, welche jeweils vor dem Schließglied zweier beiderseits des Schaltkolbens angeordneter, in Schließrichtung federbelasteter Absperrventile 28 bzw. 29 enden. Das seitens des Beaufschlagungsraumes 24 befindliche Absperrventil 28 überwacht eine Verbindung vom Beaufschlagungsraum 24 zum Speicherraum 30 des Hydraulikspeichers 11, während das andersseitige Absperrventil 29 eine Verbindung vom Speicherraum 30 zum Raum 25 überwacht. Der Hydraulikspeicher 11 weist einen den Speicherraum 30 begrenzenden Kolben 31 auf, der andererseits von einer Feder 32 belastet ist und der seitens der Feder 32 von einem justierbaren Anschlag 33 abfangbar ist.

In Fig.4 ist der drucklose Zustand der Hydraulikbremse dargestellt, der einer maximalen Einbremsung entspricht und bei welchem der Schaltkolben 23 unter der Kraft der Feder 26 das Absperrventil 28 geöffnet und das Absperrventil 29 geschlossen hält. Die Feder 32 hält den Kolben 31 in einer einem minimalen Speicherraum 30 entsprechenden Stellung.

Steuert zum Lösen der Bremse die Bremssteuereinheit 8 eine Drucksteigerung in die Bremsleitung 7 und den Federspeicherbremszylinder 1 ein, so wird unmittelbar vor Erreichen des vollen Bremsenlösezustandes, nachdem der Federspeicherbremszylinder 1 bereits in seine Lösestellung bewegt ist, der Schaltkolben 23 entgegen der Kraft der Feder 26 verschoben, wobei sich das Absperrventil 28 schließt und das Absperrventil 29 öffnet. Während der Drucksteigerung wurde auch in den Speicherraum 30 Hydraulikmedium eingespeist. Nach Öffnen des Sperrventils 29 wird jedoch der Beaufschlagungsraum 33 in die drucklose Tankleitung 17 entleert, der Hydraulikspeicher 11 gelangt daher in die aus Fig.4 ersichtliche, unaufgeladene Stellung.

Wird zum Einleiten einer Bremsung der Hydraulikdruck in der Bremsleitung 7 vermittels der Bremssteuereinheit 8 abgesenkt, so vermag alsbald die Feder 26 den Schaltkolben 23 in die aus Fig.4 ersichtliche, linke Endstellung zu drücken, in welcher das Absperrventil 29 geschlossen und das Absperrventil 28 geöffnet ist. Aus dem Federspeicherbremszylinder 1 strömt somit rasch Hydraulikmedium durch die Rohrleitung 21 und das geöffnete Absperrventil 28 in den Speicherraum 30 ein, in welchem ein Ausgleichsdruck aufgebaut wird, der den Kolben 31 bis zum Anliegen am Anschlag 33 zurückdrückt. Die Fahrzeugbremse wird hierbei angelegt. Während des weiteren Bremsvorganges bleibt dieser Schaltzustand erhalten, bis mittelbar vor Drucklos werden des Speicherraumes 30 bei maximaler Bremsung der Hydraulikspeicher 11 wieder in die aus Fig.4 ersichtlicher Lage gelangen kann. Damit ist der Ausgangszustand wieder erreicht.

Es ist selbstverständlich möglich, auch in die Rohrleitung 21 gemäß Fig.4 ein Rückschlagventil 22 gemäß Fig.2 einzuordnen, wodurch eine Belastung der Bremsleitung 7 in ihrem langen, zur Bremssteuereinheit 8 führenden Abschnitt mit dem Hydraulikspeicher 11 zu- bzw. abzuführenden Hydraulikmedium vermieden wird. Mittels des Anschlages 33 kann das Aufnahmevolumen des Hydraulikspeichers 11 derart justiert werden, daß zu Bremsbeginn ein Anlegen der Fahrzeugbremse mit einer ganz bestimmten Anlegekraft erfolgt.

- 12 -

0183089

Durch die beidseitige Hydraulikmedium-Beaufschlagung des Schaltkolbens 23 werden Schwierigkeiten durch evtl. Undichtigkeiten an der Schaltkolbenabdichtung vermieden.

Ebenso wie die mit einem Federspeicherbremszylinder ausgerüstete Hydraulikbremse nach Fig.2 in einfacher Weise in eine einen Bremszylinder 1' aufweisende Hydraulikbremse nach Fig.3 umgestaltbar ist, kann auch die Hydraulikbremse nach Fig.4 in eine anstelle des Federspeicherbremszylinders 1 einen einfachen Bremszylinder aufweisende Hydraulikbremse umgestaltet werden. Hierzu ist neben der Bremssteuereinheit 8 und deren Ansteuerung insbesondere das Schnellanlegeventil 10'' entsprechend umzugestalten, derart, daß es zu Bremsbeginn bei Auftreten eines Druckanstieges in der Bremsleitung 7 schaltet und dabei ein den bis dahin aufgeladenen Hydraulikspeicher 11 an den Bremszylinder anschließendes Absperrventil öffnet. Letztlich ist so das Steuerungsverhalten der beiden Absperrventile 28 und 29 gemäß Fig.4 umzukehren, zusätzlich darf der Schaltkolben 23 auf Seiten der Feder 26 nicht vom Druck in der zur Bremssteuereinheit führenden Speicherleitung beaufschlagt sein, sondern muß hier einen ständig drucklos gehaltenen Raum begrenzen.

Kurzfassung

Die Hydraulikbremse für Fahrzeuge, insbesondere Schienenfahrzeuge, weist nahe des Bremszylinders bzw. Federspeicherbremszylinders 1 eine Schnellanlegeeinrichtung auf, welche zu Bremsbeginn die lange, zur räumlich entfernten Bremssteuereinheit führende Bremsleitung 7 vom Durchsatz großer Hydraulikmedienmengen entlastet und somit ein beschleunigtes Anlegen der Fahrzeugbremse bewirkt. Die Schnellanlegeeinrichtung umfaßt ein Schnellanlegeventil 10' und einen Hydraulikspeicher 11. Während gelöster Bremse wird der Hydraulikspeicher 11 auf einen Bremsdruck aufgeladen gehalten. Zu Bremsbeginn wird der Hydraulikspeicher 11 mit dem Bremszylinder bzw.

Federspeicherbremszylinder 1 verbunden, wodurch zwischen beiden ein rascher Druckausgleich eintritt, welcher zum Anlegen der Fahrzeugbremse ausreicht. Die weitere Bremsung erfolgt in üblicher Weise durch entsprechende Druckeinsteuerung in die Bremsleitung 7 vermittels der Bremssteuereinheit 8.

- *14* -                                          0183089

Knorr-Bremse GmbH AG                 München, den 7.11.1984

Moosacher Straße 80                  TP-ku

8000 München 40                      unser Zeichen: - 1819 -

                                     Text.Nr.: 0054P


Bezugszeichenliste

| 1    | Federspeicherbremszylinder |
|------|----------------------------|
| 1'   | Bremszylinder |
| 2    | Kolben |
| 3    | Beaufschlagungsraum |
| 3'   | Beaufschlagungsraum |
| 4    | Speicherfeder |
| 5    | Bremshebel |
| 6    | Bremsbacken |
| 7    | Bremsleitung |
| 8    | Bremssteuereinheit |
| 9    | Schnellanlegeeinrichtung |
| 10   | Schnellanlegeventil |
| 10'  | Schnellanlegeventil |
| 10'' | Schnellanlegeventil |
| 11   | Hydraulikspeicher |
| 12   | Rohrleitung |
| 13   | hydraulischer Druckspeicher |
| 14   | Hydraulikpumpe |
| 15   | Vorratsbehälter |
| 16   | Rückleitung |
| 17   | Tankleitung |
| 17'  | Speicherleitung |
| 18   | Steuerelektronik |
| 19   | Steuerkabel |
| 20   | Steuerkabel |
| 21   | Rohrleitung |

| | |
|---|---|
| 22 | Rückschlagventil |
| 22' | Rückschlagventil |
| 23 | Schaltkolben |
| 24 | Beaufschlagungsraum |
| 25 | Raum |
| 26 | Feder |
| 27 | Ventilstößel |
| 28 | Absperrventil |
| 29 | Absperrventil |
| 30 | Speicherraum |
| 31 | Kolben |
| 32 | Feder |
| 33 | Anschlag |

0183089

Knorr-Bremse GmbH AG

Moosacher Straße 80

8000 München 40

München, den 7.11.1984

TP-ku

unser Zeichen:  2 00126/ 1819

Text.Nr.: 0054P

P a t e n t a n s p r ü c h e

1. Hydraulikbremse für Fahrzeuge, insbesondere Schienenfahrzeuge, mit einer Bremssteuereinheit (8) zum Erstellen eines wenigstens einem räumlich von der Bremssteuereinheit (8) entfernt angeordneten Bremszylinder (1, 1') durch eine Bremsleitung (7) zuzuführenden Bremszylinderdruckes durch Verbinden der Bremsleitung (7) mit einem hydraulischen Druckspeicher (13) oder mit einem drucklosen Vorratsbehälter (15) oder Absperren der Bremsleitung (7), dadurch gekennzeichnet, daß räumlich nahe des Bremszylinders (1, 1') eine mit dessen Beaufschlagungsraum (3) in Verbindung stehende Schnellanlegeeinrichtung (9) angeordnet ist, welche zu Bremsbeginn einen zu diesem Zeitpunkt einen eine Bremsung bewirkenden Bremsdruck führenden Hydraulikspeicher (11) mit dem Beaufschlagungsraum (3) des Bremszylinders (1, 1') verbindet und spätestens beim nachfolgenden Bremsenlösen diese Verbindung wieder unterbricht und den Hydraulikspeicher (11) erneut mit dem Bremsdruck beaufschlagt.

2. Hydraulikbremse nach Anspruch 1, dadurch gekennzeichnet, daß die Schnellanlegeeinrichtung (9) ein an die Bremsleitung (7) angeschlossenes Schnellanlegeventil (10, 10', 10'') aufweist, welches zu Bremsbeginn den ansonsten mit einer Bremsdruckquelle verbundenen Hydraulikspeicher (11) von dieser absperrt und mit der Bremsleitung (7) verbindet.

3. Hydraulikbremse nach Anspruch 2, dadurch gekennzeichnet, daß das Schnellanlegeventil (10, 10', 10'') als 3/2-Wegeventil ausgebildet ist.

4. Hydraulikbremse nach Anspruch 2 oder 3, mit einem bei Hydraulikdruckbeaufschlagung eine Bremsung bewirkenden Bremszylinder (1'), dadurch gekennzeichnet, daß das Schnellanlegeventil (10') den Hydraulikspeicher (11) durch eine zur Bremssteuereinheit (8) führende Speicherleitung (17') mit dem dieser zugeordneten, hydraulischen Druckspeicher (13) als Bremsdruckquelle verbindet.

5. Hydraulikbremse nach Anspruch 2 oder 3, mit einem als Federspeicherbremszylinder (1) ausgebildeten Bremszylinder, dadurch gekennzeichnet, daß das Schnellanlegeventil (10') den Hydraulikspeicheer (11) durch eine zur Bremseinheit (8) führende, drucklose Tankleitung (17) mit dem dieser zugeordneten Vorratsbehälter (15) als Bremsdruckquelle verbindet.

6. Hydraulikbremse nach Anspruch 4 oder 5, dadurch gekennzeichnet, daß zwischen die Bremsleitung (7) und das Schnellanlegeventil (10', 10'') ein in Hydraulikflußrichtung zu Bremsbeginn öffnendes Rückschlagventil (22, 22') eingeordnet ist.

7. Hydraulikbremse nach Anspruch 2 oder 3, dadurch gekennzeichnet, daß das Schnellanlegeventil (10') als von einer Steuerelektronik (18) ansteuerbares Magnetventil ausgebildet ist.

8. Hydraulikbremse nach Anspruch 2 oder 3, dadurch gekennzeichnet, daß das Schnellanlegeventil (10'') einen vom Druck in der Bremsleitung (7) entgegen der Kraft einer Feder (26) beaufschlagten Schaltkolben (23) aufweist.

9. Hydraulikbremse nach Anspruch 4 oder 5 und Anspruch 8, dadurch gekennzeichnet, daß sich beidseitig des Schaltkolbens (23) durch von diesem bewegbare Ventilstößel (27) gegen Federkraft wechselweise zu öffnende Absperrventile (28, 29) befinden, die in Verbindungen vom mit der Bremsleitung (7) verbundenen Beaufschlagungsraum (24) des Schaltkolbens (23) zum Hydraulikspeicher (11) bzw. von diesem zur Speicher- bzw. Tankleitung (17) eingeordnet sind.

0183089

10. Hydraulikbremse nach Anspruch 5 und 9, dadurch gekennzeichnet, daß der Schaltkolben (23) federseitig vom Druck in der Tankleitung (17) beaufschlagt ist.

11. Hydraulikbremse nach einem oder mehreren der vorstehenden Ansprüche, dadurch gekennzeichnet, daß das Volumen des Hydraulikspeichers (11) einstellbar ist.

FIG. 1

0183089

FIG. 2

FIG. 3

0183089

0183089

FIG. 4

## EUROPÄISCHER RECHERCHENBERICHT

0183089

Nummer der Anmeldung

EP 85 11 3985

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-3 844 624 (JONES) <br> * Insgesamt; Figuren 1-2A * | 1 | B 60 T 15/38 <br> B 60 T 13/14 <br> B 60 T 13/68 |
| A | US-A-4 307 916 (STRAUT et al.) <br> * Insgesamt; Figuren 1-3 * | 1 | |
| A | GB-A-2 129 890 (ALFRED TEVES GmbH) <br> * Seite 3, Zeile 23 - Seite 4, Zeile 9; Figur 1 * | 1 | |
| A | US-A-3 549 209 (MOERICKE) | | |
| A | GB-A- 717 474 (KOVOLIS) | | |

RECHERCHIERTE SACHGEBIETE (Int. Cl.4)

B 60 T 15/00
B 60 T 13/00

Der vorliegende Recherchenbericht wurde für alle Patentansprüche erstellt.

| Recherchenort <br> DEN HAAG | Abschlußdatum der Recherche <br> 11-03-1986 | Prüfer <br> BRAEMS C.G.I. |
|---|---|---|

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82